# EUROPEAN PATENT APPLICATION

(11) **EP 3 404 596 A1**
(43) Date of publication of application: **21.11.2018**
(21) Application number: 18172243.0
(22) Date of filing: 15.05.2018
(51) Int. Cl.: G06Q 10/08, G06Q 10/06

(54) **PACKAGE RECEPTION SYSTEM**

(30) Priority: 15.05.2017 JP 2017096712
(71) Applicant: Toshiba TEC Kabushiki Kaisha, Tokyo 141-8562 (JP)
(72) Inventor: ADACHI, Tarou, Shinagawa-ku,, Tokyo 141-8562 (JP); KAMIO, Haruo, Shinagawa-ku,, Tokyo 141-8562 (JP); TODA, Mitsuyuki, Shinagawa-ku,, Tokyo 141-8562 (JP); MIMURA, Yusuke, Shinagawa-ku,, Tokyo 141-8562 (JP)
(74) Representative: Takeuchi, Maya

(57) **Abstract**

A package reception system according to an embodiment includes a measurement device. A camera captures an image of a package positioned on a surface of the measurement device and generates image data corresponding to the captured image. A first processor of the measurement determines a size of the package based on the image data. The measurement device outputs a settlement request that includes the image data, the determined size, and instructions to perform a settlement processing. The system further includes a settlement device with a storage device. A second processor of the settlement device receives the issuance request, and performs the settlement processing with respect to the fee calculated based on a size of the package determined based on the image data. The second processor controls the storage device to store, in association, the image data, the determined size, and a package code for identifying the package.

## Description

### FIELD

Embodiments described herein relate generally to a package reception system and a package reception method.

### BACKGROUND

Packages transported by a carrier are managed by using package codes included on the invoice attached to each package.

However, if the invoice is replaced under some circumstances, the package cannot be properly managed.

Therefore, when it is suspected that the invoice attached to the package is incorrect, it is desired to be able to verify whether the correct invoice is attached.

### SUMMARY OF INVENTION

To solve the above-cited problems, there is provided a package reception system comprising:
a measurement device, a camera configured to capture an image of a package positioned on a surface of the measurement device and generate image data corresponding to the captured image, and a first processor configured to:
   receive the generated image data, determine a size of the package based on the image data, and
   output a settlement request that includes the image data, the determined size, and instructions to perform a settlement processing with respect to a fee for receiving and transporting the package; and
a settlement device connected to the measurement device over a network for communicating therewith, the settlement device including a storage device and second processor configured to:
   receive the issuance request,
   perform the settlement processing with respect to the fee calculated based on a size of the package determined based on the image data, and
   control the storage device to store, in association, the image data, the determined size, and a package code for identifying the package.

Preferably the second processor may control the storage device to store the image data, the determined size and the package code only after the settlement processing is complete.

Preferably the first processor may further be configured to extract a transport destination code from the image data, the issuance request including the transport destination code, and
the second processor may further be configured to calculate the fee based on the determined size of the package and the transport destination code.

Preferably the issuance request may include the image data, and the second processor may further be configured to determine the size of the package based on the image data included in the issuance request.

Preferably the first processor may further be configured to
extract, from the image data, an image of an invoice included on the package,
determine whether complete invoice information can be determined from the extracted image of the invoice,
if the complete invoice information cannot be determined from the extracted image of the invoice, control a touch panel to display a notification to the user that the invoice information is incomplete, and
if the complete invoice information can be determined from the extracted image of the invoice, output a payment request to the settlement device that includes instructions to perform the settlement processing with respect to the fee for receiving and transporting the package, the payment request not including instructions to print the invoice.

Preferably yet, if the complete invoice information cannot be determined from the extracted image of the invoice, the processor may control the touch panel to display a graphic user interface (GUI) allowing a user to select whether to complete the invoice information via the payment apparatus or to end processing.

Preferably the settlement device may further include a touch panel, and the second processor may further be configured to control the touch panel to display a graphic user interface (GUI) allowing a user to input invoice information, and control the printer to print an invoice including the invoice information input by the user and the package code.

Preferably the measurement device may further include a weighing scale configured to acquire a weight measurement of the package positioned on the surface, and the fee may further be calculated based on the acquired weight measurement.

Preferably the settlement device may further include a communication interface configured to communicate with a package management server, and the second processor may further be configured to control the communication interface to transmit, to the package management server, the image data, the determined size and the package code.

Preferably the second processor may further be configured to:
after receiving the issuance request, determine if the settlement device can perform the settlement processing and print the invoice, and
if the settlement device cannot perform at least one of the settlement processing and printing the invoice, output the issuance request to a predetermined destination.

In another exemplary embodiment, there is also provided a package reception method comprising:
capturing an image of a package positioned on a surface of a measurement device and generating image data corresponding to the captured image;
determining a size of the package based on the image data;
calculating a fee for receiving and transporting the package based on the determined size of the package;
performing a settlement processing with respect to the fee; and
storing, in association, the image data, the determined size, and a package code for identifying the package.

Preferably the image data, the determined size and the package code may be stored only after the settlement processing is complete.

Preferably the method according to the embodiments may further comprise:
extracting, from the image data, an image of an invoice included on the package;
determining whether complete invoice information can be determined from the extracted image of the invoice; and
if the complete invoice information cannot be determined from the extracted image of the invoice, displaying a notification to the user that the invoice information is incomplete.

Preferably the method according to the embodiments may further comprise:
if the complete invoice information cannot be determined from the extracted image of the invoice, controlling a touch panel to display a graphic user interface (GUI) allowing a user to select whether to complete the invoice information via the payment apparatus or to end processing.

Preferably the method according to the embodiments may further comprise:
controlling a touch panel to display a graphic user interface (GUI) allowing a user to input invoice information; and
printing an invoice including the invoice information input by the user and the package code.

Preferably the method according to the embodiments may further comprise weighing the package positioned on the surface with a scale integrated in the surface, wherein the fee may further be calculated based on the weight of the package.

Preferably the method according to the embodiments may further comprise transmitting, to a package management server, the image data, the determined size and the package code.

In yet another exemplary embodiment there is also provided a package reception system comprising:
a measurement device including a camera configured to capture an image of a package positioned on a surface of the measurement device and generate image data corresponding to the captured image, and a first processor configured to:
   receive the generated image data, determine a size of the package based on the image data,
   determine if an image of an invoice on the package can be extracted from the image data,
   if the image of the invoice can be extracted from the image data, extract the image of the invoice and output a settlement request that includes the image data, the determined size, and instructions to perform a settlement processing with respect to a fee calculated based on the extracted image of the invoice and the determined size of the package, and
   if the image of the invoice cannot be extracted from the image data, output an issuance request that includes the image data, the determined size, and instructions to generate and print an invoice and to perform the settlement processing with respect to the fee; and
a settlement device connected to the measurement device over a network for communicating therewith, the settlement device including a storage device, a printing device and a second processor configured to:
   receive any one of the settlement request and the issuance request,
   based on the received settlement request or issuance request, perform the settlement processing with respect to the fee, and if the issuance request is received, acquire invoice information,
   after the settlement processing is performed, control the printer to print the invoice based on the invoice information, the invoice including a package code for identifying the package, and
   control the storage device to store, in association, the image data, the determined size, and the package code.

Preferably the settlement device may further include a touch panel, and the second processor may further be configured to control the touch panel to display a graphic user interface (GUI) allowing a user to input the invoice information.

Preferably the measurement device may further include a touch panel, and if the image of the invoice cannot be extracted from the image data, or if the invoice information cannot be acquired from the extracted image of the invoice, the first processor may control a touch panel to display a graphic user interface (GUI) allowing the user to select whether to complete the invoice information via the payment apparatus or to end processing.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a perspective view illustrating an example of a package reception system according to the present embodiment.
FIG. 2 is a perspective view illustrating an example of use of the package reception system illustrated in FIG. 1.
FIG. 3 is a block diagram illustrating example hardware configurations of ae measurement device and a settlement device illustrated in FIGS. 1 and 2.
FIG. 4 is an example sequence of operations performed by a processor provided in the measurement device.
FIG. 5 is an example sequence of operations performed by a processor provided in the settlement device.
FIG. 6 is a modified example sequence of operations performed by the processor illustrated in FIG. 3 provided in the measurement device.
FIG. 7 is a modified example sequence of operations performed by the processor provided in the settlement device.

### DETAILED DESCRIPTION

Embodiments provide a package reception system which enables verification of whether a package being transported includes a package code corresponding to a package code associated with a package initially received for transport .

A package reception system according to an embodiment includes a measurement device. A camera captures an image of a package positioned on a surface of the measurement device and generates image data corresponding to the captured image. A first processor of the measurement device receives the generated image data, and determines a size of the package based on the image data. The measurement device outputs a settlement request that includes the image data, the determined size, and instructions to perform a settlement processing with respect to a fee for receiving and transporting the package. The system further includes a settlement device with a storage device. A second processor of the settlement device receives the issuance request, and performs the settlement processing with respect to the fee calculated based on a size of the package determined based on the image data. The second processor controls the storage device to store, in association, the image data, the determined size, and a package code for identifying the package.

Hereinafter, an example of the embodiment will be described with reference to the drawings.

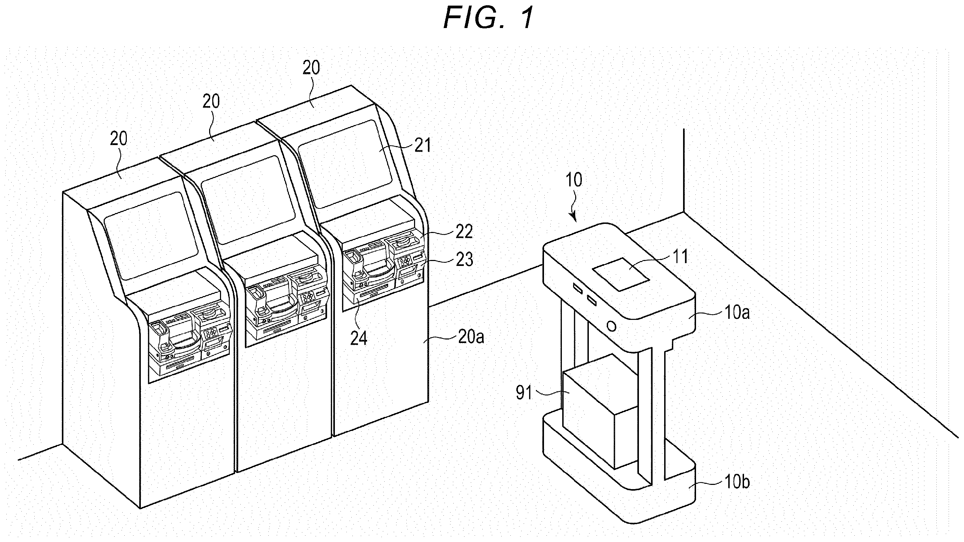

FIG. 1 is a perspective view illustrating an example of a package reception system 100 according to the present embodiment.

The package reception system 100 includes one or more measurement devices 10 and one or more settlement devices 20. In FIG. 1, one measurement device 10 and three settlement devices 20 are illustrated. The package reception system 100 may include any number of measurement devices 10 and settlement devices 20.

The measurement device 10 measures the size and weight of a package 91 to be received for transport. In addition, when the invoice is attached to the package, the measurement device recognizes the invoice information described in the invoice. The invoice information includes a package code for identifying the package and a transport destination code for identifying a transport destination. For example, a zip code can be used as a transport destination code. The measurement device 10 has an upper housing 10a and a lower housing 10b. A touch panel 11 is attached to the upper housing 10a in a state that the display surface of the touch panel 11 faces up from the upper housing 10a.

The settlement device 20 performs a payment processing with respect to a fee determined based on the size and weight measured by the measurement device 10 and the invoice information recognized by the measurement device 10 or separately input invoice information. A touch panel 21, an automatic change machine 22, a receipt printer 23, and a slip printer 24 are attached to a housing 20a of the settlement device 20 in a state in which a part thereof is exposed from the housing 20a.

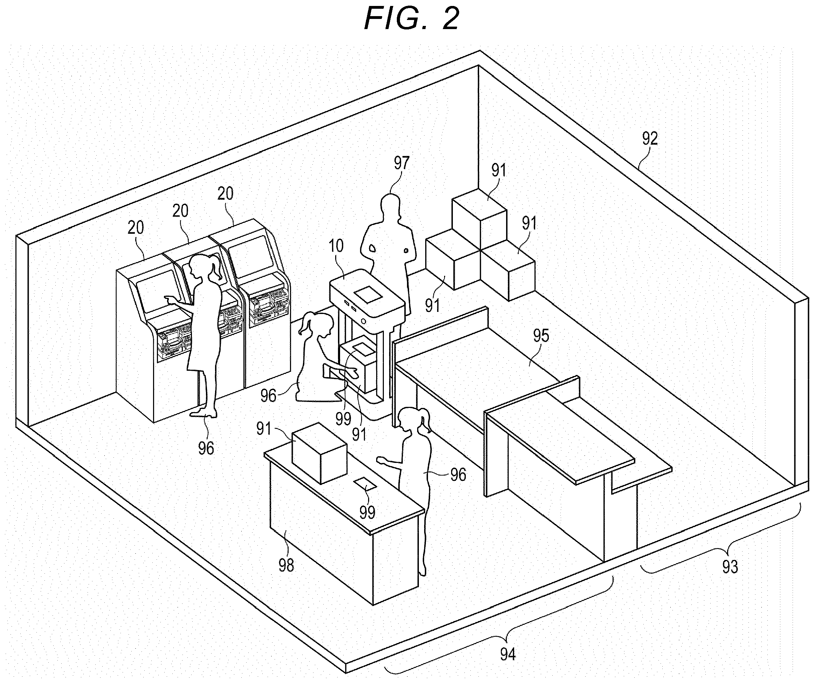

FIG. 2 is a perspective view illustrating an example of use of the package reception system 100 in a store 92 that receives the request for transport of the package 91.

The measurement device 10 is positioned in the store 92 at the boundary between a clerk area 93 and a customer area 94 in parallel with a window counter 95 separating the clerk area 93 from the customer area 94. A customer 96 places the package 91 that the customer 96 brought into the store 92 on the measurement device 10. The package 91 placed on the measurement device 10 is moved by the clerk 97 from the measurement device 10 to the clerk area 93 side.

The settlement device 20 is installed in the customer area 94. The customer 96 settles the fee determined based on the measurement result by the measurement device 10, in the settlement device 20.

The package 91 to which an invoice 99 is attached, in which the invoice information is entered by the customer 96 at a table 98 or at home, may be placed on the measurement device 10. Likewise, the package 91 to which an invoice 99 is not attached may be placed on the measurement device 10.

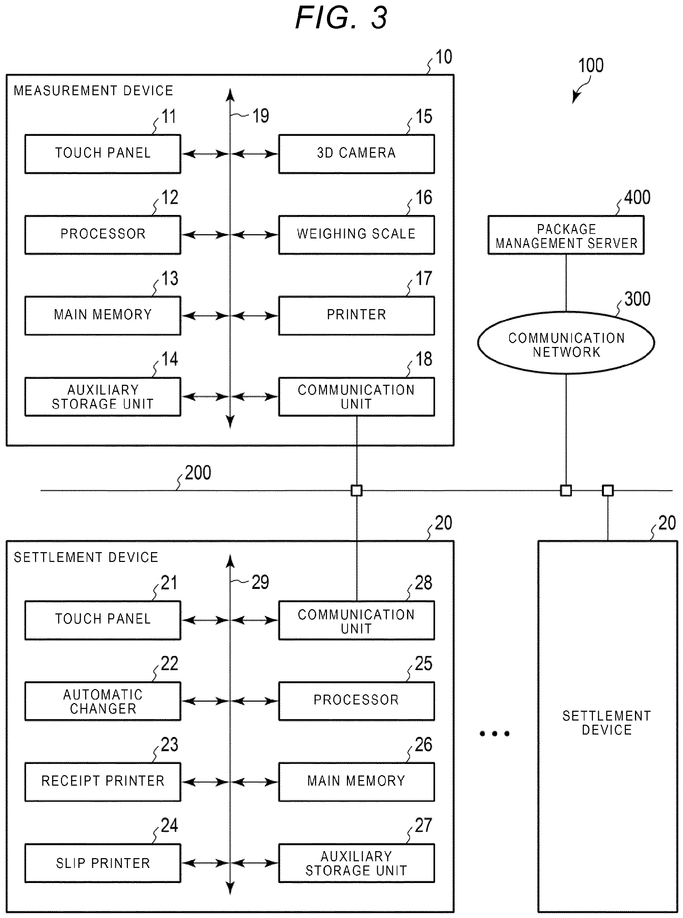

FIG. 3 is a block diagram illustrating example hardware configurations of the measurement device 10 and the settlement device 20.

In addition to the touch panel 11, the measurement device 10 includes a processor 12, a main memory 13, an auxiliary storage unit 14, a 3D camera 15, a weighing scale 16, a printer 17, a communication interface 18, and a transmission line 19.

The operator of the measurement device 10 inputs various instructions by a touch operation on the touch panel 11. The touch panel 11 displays various types of information to the operator. The operator of the measurement device 10 may be either the customer 96 or the clerk 97.

The processor 12, the main memory 13, and the auxiliary storage unit 14 are connected by the transmission line 19 to function as a computer that executes information processing for operating the measurement device 10.

The processor 12 functions as the central component of the computer. The processor 12 controls as the various components of the measurement device 10 according to the operating system and the application program to realize various functions.

The main memory 13 functions the main memory of the computer. The main memory 13 includes a nonvolatile memory area and a volatile memory area. The main memory 13 stores the operating system and the application program in the nonvolatile memory area. In addition, the main memory 13 stores data necessary for the processor 12 to execute processing for controlling each component in a nonvolatile or volatile memory area. The main memory 13 uses the volatile memory area as a work area into which data is appropriately written by the processor 12.

The auxiliary storage unit 14 functions as an auxiliary storage device of the computer. As the auxiliary storage unit 14, for example, an electric erasable programmable read-only memory (EEPROM), a hard disc drive (HDD), a solid state drive (SSD), or other known various types of storage devices can be used. The auxiliary storage unit 14 stores data used by the processor 12 in performing various processes and data generated by processing in the processor 12. The auxiliary storage unit 14 may also store an application program.

The 3D camera 15 is attached to the upper housing 10a so as to capture an image facing downwards towards the lower housing 10b. The 3D camera 15 generates three-dimensional image data including depth direction information.

The weighing scale 16 is incorporated into the lower housing 10b. The weighing scale 16 measures the weight of the package 91 placed on the lower housing 10b and outputs the measurement value.

The printer 17 prints an image on a print sheet.

The communication interface 18 performs data communication through a local area network (LAN) 200.

The transmission line 19 includes an address bus, a data bus, a control signal line, and the like, and transmits data and control signals exchanged between the connected components.

In addition to the touch panel 21, the automatic changer 22, the receipt printer 23, and the slip printer 24, the settlement device 20 also includes a processor 25, a main memory 26, an auxiliary storage unit 27, a communication interface 28, and a transmission line 29.

The operator of the settlement device 20 inputs various instructions by a touch operation on the touch panel 21. The touch panel 21 displays various types of information to the operator. The operator of the settlement device 20 is mainly the customer 96, but the clerk 97 may be the operator in some cases.

The automatic changer 22 receives coins and bills inserted into the coin slot and the bill slot. The automatic changer 22 discharges coins and bills as change from the coin slot and the bill slot.

The receipt printer 23 prints the receipt indicating the result of settlement and the deposit of the package 91.

The slip printer 24 prints a slip that includes invoice information to be attached as an invoice 99 to the package 91.

The processor 25, the main memory 26, and the auxiliary storage unit 27 are connected by the transmission line 29 to function as a computer that executes information processing for operating the settlement device 20.

The processor 25 functions as the central component of the computer. The processor 25 controls each component of the settlement device 20 according to the operating system and the application program to realize various functions.

The main memory 26 functions as the main memory of the computer. The main memory 26 includes a nonvolatile memory area and a volatile memory area. The main memory 26 stores the operating system and the application program in the nonvolatile memory area. In addition, the main memory 26 stores data necessary for the processor 25 to execute processing for controlling each unit in a nonvolatile or volatile memory area. The main memory 26 uses the volatile memory area as a work area into which data is appropriately written by the processor 25.

The auxiliary storage unit 27 functions as an auxiliary storage device of the computer. As the auxiliary storage unit 27, for example, an EEPROM, a HDD, an SSD, or other well-known various storage devices can be used. The auxiliary storage unit 27 stores data used by the processor 25 in performing various processes and data generated by processing in the processor 25. The auxiliary storage unit 27 may also store an application program.

The communication interface 28 performs data communication with the measurement device 10 through the LAN 200. The communication interface 28 performs data communication with a package management server 400 through the LAN 200 and a communication network 300.

The transmission line 29 includes an address bus, a data bus, a control signal line, and the like, and transmits data and control signals exchanged between the connected components.

The communication network 300 is the Internet, a virtual private network (VPN), or the like, which is capable of communicating data. The package management server 400 manages the transport status of the package.

Next, the operation of the package reception system 100 configured as described above will be described.

When the measurement device 10 is in the operating state, the processor 12 executes information processing as described below according to the application program. In addition, the details of processes to be described later are an example, and it is possible to use various processes capable of achieving the similar results in appropriate.

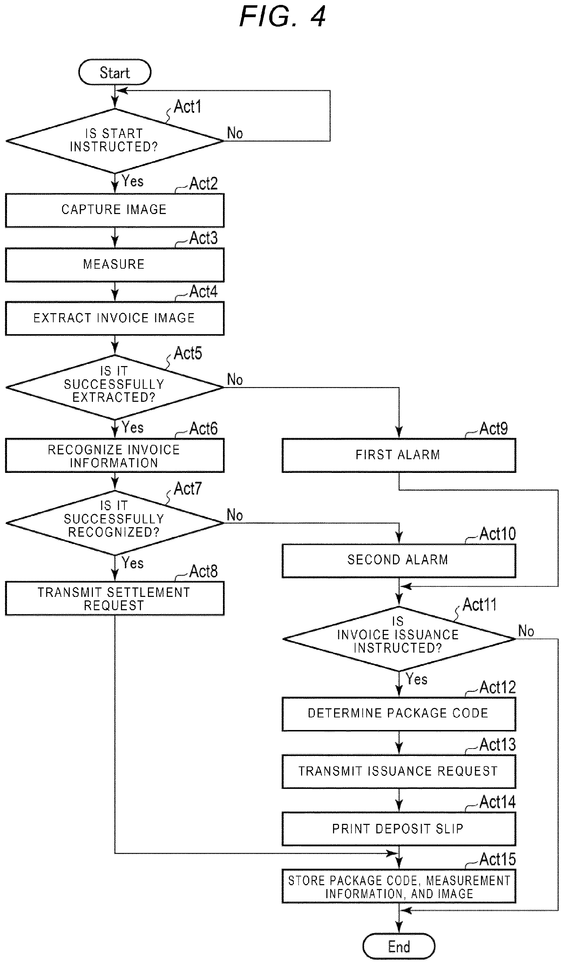

FIG. 4 is a flowchart of information processing by the processor 12.

In Act 1, the processor 12 waits for an instruction by the operator to start. At this time, for example, the processor 12 displays the standby screen on the touch panel 11. The standby screen is a screen for guiding the customer 96 to touch a start button on the standby screen, after the package 91 is placed on the lower housing 10b. When the customer 96 performs an operation according to the guidance on the standby screen, the touch of the start button is detected on the touch panel 21. In response to the detection, the processor 12 makes a determination of Yes and proceeds to Act 2. At this time, the processor 12 may make a determination of Yes only if the measurement value of the weight by the weighing scale 16 is greater than or equal to a predetermined threshold value.

In Act 2, the processor 12 causes the 3D camera 15 to capture an image. Specifically, the 3D camera 15 photographs the package 91 placed on the lower housing 10b and generates image data. The processor 12 temporarily stores the image data generated by the 3D camera 15 in the main memory 13 or the auxiliary storage unit 14.

In Act 3, the processor 12 measures the size of the package 91 by analyzing the image data. Well-known processing can be applied to the analysis processing for this purpose. Further, the processor 12 acquires the measurement value of the weight from the weighing scale 16. Thus, by the processor 12 executing the information processing based on the application program, the computer having the processor 12 as the central component functions as a measuring unit for measuring the size of the package 91. Likewise, the computer having the processor 12 as the central component functions as an acquiring unit for acquiring the measurement value of the weight of the package 91.

In Act 4, the processor 12 attempts to extract the invoice image from the generated image data. The invoice image is an image of the area in which the invoice 99 is reflected in the image data. A well-known image processing technology can be applied to extract an invoice image. Accordingly, by the processor 12 executing the application program, the computer having the processor 12 as the central component functions as an extraction unit that extracts the invoice 99 from the captured image of the package 91.

In Act 5, the processor 12 checks whether or not the invoice image is successfully extracted. If the invoice image is successfully extracted, it is determined as Yes and the process proceeds to Act 6. That is, if an image of the invoice 99 attached to the package 91 can be extracted from the captured image, the processor 12 proceeds to Act 6.

In Act 6, the processor 12 recognizes the invoice information described in the invoice 99 from the extracted invoice image. For this recognition, well-known character recognition processing can be applied.

In Act 7, the processor 12 checks whether all the information that needs to be included in the invoice information can be extracted. If all the information can be extracted, it is determined as Yes and the process proceeds to Act 8.

In Act 8, the processor 12 transmits a settlement request to a predetermined one of the plurality of settlement devices 20 via the communication interface 18 to the LAN 200. The settlement request includes the size and measurement value obtained in Act 3 and the invoice information recognized in Act 6, and requests the settlement device 20 to perform settlement processing with respect to a fee. The processor 12 may determine the fee amount from the size and measurement value obtained in Act 3 and the invoice information recognized in Act 6, and may include data indicating the fee amount in the settlement request. The settlement request is transmitted through the LAN 200 and received by the communication interface 28 of the predetermined settlement device 20 as the destination. The package 91 is removed from the measurement device 10 by the clerk 97 and stored in the clerk area 93. Thus, by the processor 12 executing the information processing based on the application program, the computer having the processor 12 as the central component functions as a requesting unit for requesting the settlement device 20 to execute settlement.

Incidentally, as described above, the invoice 99 may be attached or may not be attached to the package 91 placed on the measurement device 10. If the invoice 99 is not attached to the package 91, the processor 12 cannot extract the invoice image at Act 4. In this case, the processor 12 makes a determination of No in Act 5 and proceeds to Act 9.

In Act 9, the processor 12 issues a first notification. The first notification notifies the customer 96 that the invoice 99 is not attached to the package 91. The processor 12 displays on the touch panel 11, a notification screen including a text message indicating that the invoice 99 is not attached to the package 91 and a graphical user interface (GUI) that allows the customer 96 to provide an instruction as to whether or not the invoice 99 is issued to the settlement device 20.

However, even if the invoice 99 is attached to the package 91, all of the necessary invoice information may not be correctly stated. Then, if there is a deficiency in the invoice information, the processor 12 makes a determination of No in Act 7 and proceeds to Act 10.

In Act 10, the processor 12 issues a second notification. The second notification notifies the customer 96 that the statement of the invoice 99 is incomplete. The processor 12 displays on the touch panel 11, a notification screen including a text message indicating that the invoice 99 is incomplete and a GUI that allows the customer 96 to provide an instruction as to whether or not the invoice 99 is issued in the settlement device 20.

After issuing the first or second notification at Act 9 or Act 10, the processor 12 proceeds to Act 11.

In Act 11, the processor 12 checks whether or not an instruction to issue an invoice is received. Then, if an operation to instruct issuance of the invoice is performed via the GUI included in the warning screen, the processor 12 makes a determination of Yes and proceeds to Act 12.

In Act 12, the processor 12 determines a package code of the package 91 placed on the lower housing 10b, which is different from a previously used package code, according to a predetermined rule.

In Act 13, the processor 12 transmits an issuance request to a predetermined one of the plurality of settlement devices 20 from the communication interface 18 via the LAN 200. The issuance request includes the size and measurement value measured in Act 3 and requests the settlement device 20 to issue the invoice 99 after performing the settlement processing with respect to the fee. The issuance request is transmitted through the LAN 200 and received by the communication interface 28 of the predetermined settlement device 20 as the destination. Thus, by the processor 12 executing the information processing based on the application program, the computer having the processor 12 as the central component functions as a request unit for requesting the settlement device 20 to execute settlement.

In Act 14, the processor 12 causes the printer 17 to print a deposit slip. The deposit slip includes at least the package code determined in Act 12. The deposit slip is provisionally attached to the package 91 by the clerk 97 so as to manage the package 91 before the invoice 99 issued by the settlement device 20 is attached (as will be described later). The package 91 is removed from the measurement device 10 by the clerk 97 and stored in the clerk area 93.

After this, the processor 12 proceeds to Act 15. The processor 12 also proceeds to Act 15 even when the settlement request is transmitted in Act 8.

In Act 15, the processor 12 stores, in the auxiliary storage unit 14, the measurement information including the size and measurement value measured in Act 3 and the image data temporarily stored in Act 2 in association with the package code recognized in Act 6 or the package code determined in Act 12. Then, the processor 12 ends the information processing illustrated in FIG. 4. The processor 12 repeatedly executes the information processing illustrated in FIG. 4, and therefore the storing is repeatedly performed. Generally, the processor 12 stores new measurement information and image data without deleting the previously stored measurement information and the image data. However, when a predetermined condition, such as a case where the free space of the auxiliary storage unit 14 becomes small, is satisfied, new measurement information and image data may be stored by deleting or overwriting the previously stored measurement information and image data. Thus, by the processor 12 executing the information processing based on the application program, the computer having the processor 12 as the central component functions as a storage unit. The auxiliary storage unit 14 is an example of the storage device that stores measurement information and image data.

When an instruction not to issue an invoice is provided using the GUI included in the warning screen, the processor 12 makes a determination of No in Act 11 and ends the information processing illustrated in FIG. 4 without performing Act 12 to Act 15. In this case, the package 91 is removed from the measurement device 10 by the customer 96.

Note that the processor 12 may wait until the measurement value of the weight at the weighing scale 16 becomes less than the threshold value by removing the package 91 from the measurement device 10 and end the information processing illustrated in FIG. 4 at that time. Once the information processing illustrated in FIG. 4 is ended, the processor 12 starts the information processing again at an appropriate timing. In starting the information processing illustrated in FIG. 4 again, the processor 12 may check that for example, a predetermined condition is satisfied, such as that the measurement value of the weight at the weighing scale 16 is less than the threshold value.

When the settlement device 20 is in the operating state, the processor 25 executes information processing as described below according to the application program. In addition, the contents of processes to be described later are an example, and it is possible to use various processes capable of achieving similar results.

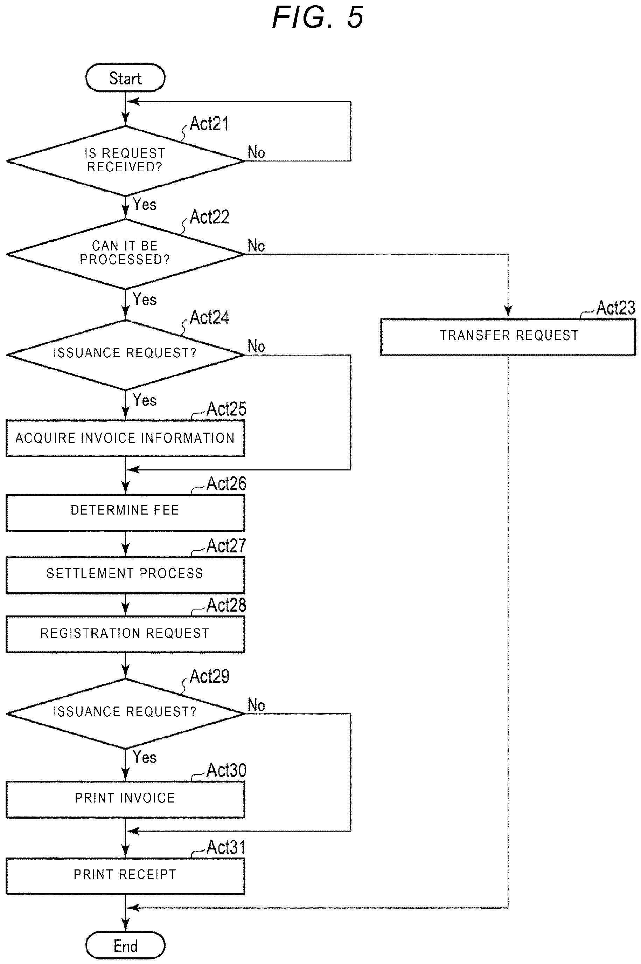

FIG. 5 is a flowchart of information processing by the processor 25.

In Act 21, the processor 25 waits for reception of the aforementioned settlement request or issue request. Then, if the settlement request or issue request is received by the communication interface 28, the processor 25 makes a determination of Yes and proceeds to Act 22.

In Act 22, the processor 25 checks whether or not the settlement device 20 including the processor 25 is in a state in which the operation for settlement can be executed. Then, if a predetermined failure such as, for example, shortage of money held in the automatic changer 22 occurs, the processor 25 makes a determination of No and proceeds to Act 23.

In Act 23, the processor 25 transfers the received settlement request or issuance request to another predetermined settlement device 20. When the transfer of the settlement request or the issuance request is completed, the processor 25 ends the information processing illustrated in FIG. 5. The measurement apparatus 10 may also be a transfer destination of the payment request or the issuance request. In this case, if the settlement request or the issuance request is received by the communication interface 18, the processor 12 in the measurement device 10 transfers the settlement request or the issuance request again to a different predetermined settlement device 20.

If the settlement device 20 including the processor 25 is in a state in which the operation for settlement can be executed, the processor 25 makes a determination of Yes in Act 22 and proceeds to Act 24. At this time, the processor 25 may notify the measurement device 10 that the request is received. In this case, the processor 12 in the measurement device 10 may control the touch panel 11 to display a screen indicating which settlement device 20 among the plurality of settlement devices 20 is to perform settlement processing. Alternatively, the processor 25 in the settlement device 20 may control the touch panel 21 to display a screen in which the settlement processing can be performed. Alternatively, in the measurement device 10, the processor 12 may include the image data acquired in Act 2 in the settlement request or the issuance request. In such a case, the processor 25 of the settlement device 20 may display the image represented by the image data, that is, the image in which the package 91 is included, on the touch panel 21, and notify the customer 96 that the fee for which package 91 is settled.

In Act 24, the processor 25 checks whether or not the received request is an issuance request. If the issuance request is received, the processor 25 makes a determination of Yes and proceeds to Act 25.

In Act 25, the processor 25 acquires the invoice information. As an example, the processor 25 controls the touch panel 21 to display an input form for allowing the customer 96 to input various types of information to be described on the invoice 99. Then, the processor 25 acquires various types of information input on the touch panel 21 with the operation according to the input form, and sets the input information as invoice information. When the processor 25 ends acquisition of the invoice information, it proceeds to Act 26. If the settlement request is received, the processor 25 makes a determination of No in Act 24, omits Act 25, and proceeds to Act 26.

In Act 26, when the settlement request is received, the processor 25 determines a fee, based on the size and measurement value included in the settlement request and the transport destination code included in the invoice information included in the settlement request. When the issuance request is received, the processor 25 determines a fee, based on the size and measurement value included in the issuance request and the transport destination code included in the invoice information acquired in Act 25. At this time, the processor 25 determines the transport destination based on the transport destination code. Thus, by the processor 12 executing the information processing based on the application program, the computer having the processor 12 as the central component functions as a determination unit for determining the transport destination.

In Act 27, the processor 25 executes a settlement processing for settling the determined fee. Specifically, the processor 25 activates the automatic changer 22 to receive the cash corresponding to the determined fee. Incidentally, for example, a reader/writer for electronic money may be provided with the settlement device 20 so that the determined fee may be settled with electronic money. Alternatively, the settlement processing may be performed by various other well-known settlement methods such as credit settlement or debit card settlement. Thus, by the processor 25 performs information processing based on the application program, the computer having the processor 25 as the central component receives a request from the measurement device 10 and performs settlement processing. That is, the computer functions as a receiving unit and a settlement unit.

In Act 28, the processor 25 transmits a registration request to the package management server 400 from the communication interface 28 to the LAN 200. The registration request includes at least the package code and the identification code of the settlement device 20, and includes a request for the package management server 400 to start management regarding the transport of the package 91. The registration request is transmitted through the LAN 200 and the communication network 300 and received by the package management server 400. The package management server 400 adds the package code included in the registration request to the management database. Further, the package management server 400 sets the status data shown in the management database with respect to the package identified by the package code, as data indicating that the package is stored in a store where the settlement device 20 identified by the identification code included in the registration request is installed. The status data is appropriately changed in the course of transporting the package 91 identified by the associated package code. In other words, as the package code is added to the management database, management related to the transport of the package 91 identified by the package code is started, and thus the reception the package 91 for transport is completed.

In Act 29, the processor 25 checks whether or not the received request is an issuance request. If the issuance request is received, the processor 25 makes a determination of Yes and proceeds to Act 30.

In Act 30, the processor 25 causes the slip printer 24 to print an invoice 99 indicating the invoice information acquired in Act 25. When printing is ended, the processor 25 proceeds to Act 31. Thus, by the processor 25 executing the information processing based on the application program, the computer having the processor 25 as the central component receives the issuance request from the measurement device 10 and issues the invoice 99. That is, the computer functions as a receiving unit and issuing unit. At this time, the processor 25 may indicate on the invoice 99, at least one of the size and measurement value included in the settlement request or the issue request. If the received request is the settlement request, the processor 25 makes a determination of No in Act 29, passes the Act 30, and proceeds to Act 31.

In Act 31, the processor 25 causes the receipt printer 23 to print a receipt indicating the result of the settlement processing and the deposit of the package 91. Incidentally, the receipt printer 23 may print a single receipt indicating both the result of the settlement processing and the deposit of the package 91, or may print separate receipts respectively. Then, the processor 25 ends the information processing illustrated in FIG. 5. When the information processing illustrated in FIG. 5 is temporarily ended, the processor 25 starts the information processing again at an appropriate timing. In starting the information processing illustrated in FIG. 5 again, the processor 25 may check whether a predetermined condition, such as that the invoice 99 and the receipt are removed, is satisfied.

When the invoice 99 is printed, the customer 96 hands the invoice 99 to the clerk 97. The clerk 97 searches for the corresponding package 91 from the deposited packages 91 by comparing the package code described on the invoice 99 with the package codes included in the deposit slips attached to the deposited packages 91, and attaches the invoice 99 to the corresponding package 91.

As described above, according to the package reception system 100, many operations are performed by the customers 96, such that it is possible to receive the package 91 for transport while minimizing the involvement of the clerk 97.

Further, according to the package reception system 100, the measurement device 10 stores the image data representing the image in which the package 91 is included, and the size measured from the image, in association with the package code of the package 91, in the auxiliary storage unit 14. Therefore, when it is suspected that the invoice 99 attached to the package 91 is incorrect, it is possible to verify the invoice. That is, for example, a staff member of the carrier compares the appearance and size of the corresponding package 91 with the image and the size represented by the image data stored in association with the package code described on the invoice 99. Then, the staff member can confirm whether the correspondence between the package 91 and the invoice 99 is the same as that at the time of reception.

Further, the measurement device 10 also stores the measurement value of the weight of the package 91 in the auxiliary storage unit 14 together with the image data and the size. Therefore, in the above verification, the staff member can make a determination taking account of the difference in the weight of the package 91 in question compared to the stored measurement value.

Further, the measurement device 10 issues a settlement request to the settlement device 20 if the invoice 99 is attached, and issues an issuance request if the invoice 99 is not attached. Then, the settlement device 20 issues an invoice after completion of settlement processing in response to the issuance request, but does not issue an invoice after completion of settlement processing in response to the settlement request. Therefore, the customer 96 can use the invoice that the customer 96 enters necessary information, or can use the invoice issued by the settlement device 20.

Further, even if the invoice 99 is attached, when necessary information cannot be recognized from the invoice 99, the measurement device 10 issues an issuance request to the settlement device 20. Therefore, the customer 96 can alternatively use an invoice issued by the settlement device 20 without rewriting the invoice 99.

Further, when the invoice 99 is not attached or when the invoice 99 from which necessary information cannot be recognized is attached, the measurement device 10 determines whether to issue the invoice 99 by the settlement device 20 or not depending on the operation by the operator. Therefore, if the customer 96 wants to use an invoice 99 newly filled in by him or herself or an invoice 99 generated by correcting the already filled-in invoice by him or herself, the customer 96 can prevent the invoice 99 from being issued by the settlement device 20.

It is possible to implement the following various modifications on this embodiment.

With respect to the package 91 for which settlement is completed, measurement information and image data may be stored.

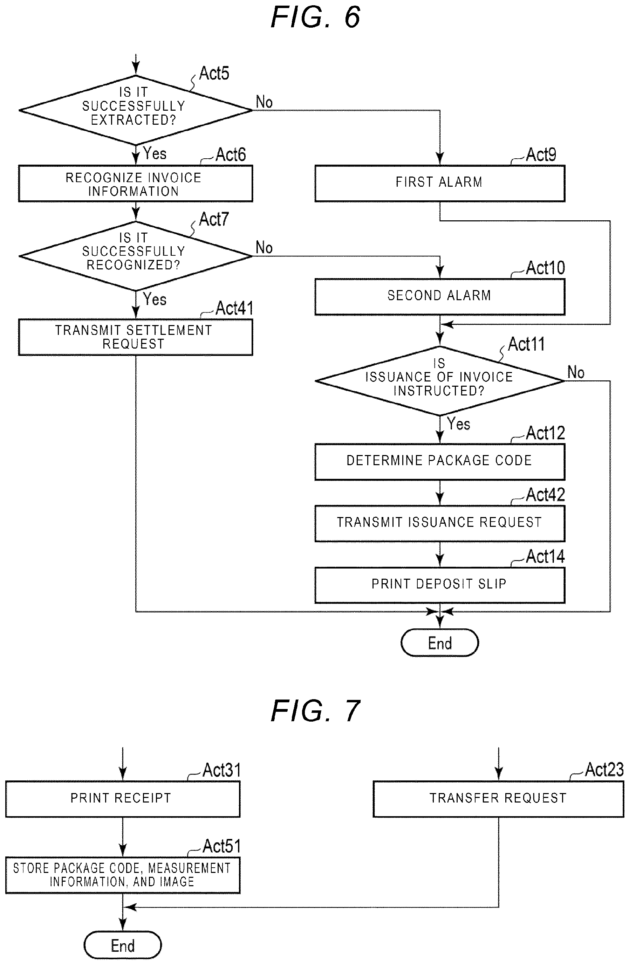

FIG. 6 is a diagram illustrating a modification example of information processing by the processor 12. FIG. 7 is a diagram illustrating a modification example of information processing by the processor 25. In FIGS. 6 and 7, a part of the same operations as those shown in FIGS. 4 and 5 are not shown, and the same operations as those shown in FIG. 6 and FIG. 7 are denoted by the same reference numerals.

For example, the information processing by the processor 12 shown in FIG. 4 is changed as shown in FIG. 6, and the information processing by the processor 25 shown in FIG. 5 is changed as shown in FIG. 7.

That is, if the processor 12 of the measurement device 10 makes a determination as Yes in Act 7, and it proceeds to Act 41.

In Act 41, the processor 12 transmits a settlement request similarly to Act 8 shown in FIG. 4. However, in Act 41, the processor 12 includes the image data temporarily stored in Act 2 in the settlement request. When the processor 12 ends transmitting the settlement request, the processor 12 ends the information processing without performing Act 15 in FIG. 4.

On the other hand, the processor 12 performs Act 42 instead of Act 13 shown in FIG. 4.

In Act 42, the processor 12 transmits an issuance request similarly to Act 13 shown in FIG. 4. However, Act 42, the processor 12 includes the image data temporarily stored in Act 2 in the issuance request.

When the processor 25 in the settlement device 20 ends Act 23 or Act 31, in any case, the processor 25 proceeds to Act 51.

In Act 51, the processor 25 stores the measurement information and image data included in the settlement request or the issuance request in the auxiliary storage unit 27 in association with the package code included in the settlement request or the issuance request. Then, the processor 25 ends the information processing. Similarly to the case of Act 15, the processor 25, in general, stores new measurement information and image data without deleting previously stored measurement information and image data.

In this way, only measurement information and image data concerning the package 91 for which settlement processing is completed are stored. Therefore, the measurement information and image data concerning the package 91 for which reception is canceled without reaching completion of the settlement processing are not stored, and the amount of stored data can be reduced.

The package code of the package 91 for which the settlement processing is completed may be transmitted from the settlement device 20 to the measurement device 10, and the measurement device 10 may store the measurement information and the image data in association with the package code only for the transmitted package code in the auxiliary storage unit 14.

Further, the settlement device 20 may store the measurement information and the image data in association with the package code in the auxiliary storage unit 27 irrespective of whether settlement processing is completed or not.

The measurement information and the image data may be stored in association with the package code in any other storage devices, for example, a storage device provided in any server device connected through the LAN 200 or the communication network 300.

At least one of the touch panel 11, the auxiliary storage unit 14, the 3D camera 15, the weighing scale 16, and the printer 17 may not be provided in the measurement device 10. For example, another independent touch panel, storage unit, 3D camera, weighing scale and printer may be externally attached to the measurement device 10.

At least one of the touch panel 21, the automatic changer 22, the receipt printer 23, the slip printer 24, and the auxiliary storage unit 27 may not be provided in the settlement device 20. For example, another independent touch panel, automatic changer, receipt printer, slip printer, and auxiliary storage unit may be externally attached to the settlement device 20.

The measurement device 10 and the settlement device 20 may be integrally configured as a single device.

The processor 12 may display the measurement result in Act 3 on the touch panel 11 or a display device provided separately for the clerk 97.

A part of the above-described information processing performed by the processor 12 may be omitted. For example, if it is determined as No in Act 5 or Act 7, the processor 12 may proceed to Act 12 without checking Act 11. In addition, the processor 12 may not perform at least one of Act 9 and Act 10. Act 14 may be omitted. Further, Act 15 may be omitted.

The measurement information and the image data associated with the package code may be stored in the auxiliary storage unit 27 in the settlement device 20. In this case, the processor 12 in the measurement device 10 includes the image data in the settlement request and issuance request. Alternatively, the processor 25 may request the measurement device 10 to transmit the image data, and the processor 12 may transmit the image data to the settlement device 20 separately from the settlement request and issuance request in response.

Any method of issuing the settlement request and issuance request from the measurement device 10 to the settlement device 20 may be used.

Instead of the image captured by the 3D camera 15, a two-dimensional image capturing type camera may be used, and images obtained by capturing the package 91 from a plurality of directions by moving the camera or while rotating the package 91 may be used to determine the size of the package 91. Alternatively, instead of the image captured by the 3D camera 15, a plurality of two-dimensional image capturing type cameras may be used, and images obtained by capturing the package 91 from a plurality of directions by the plurality of cameras may be used to determine the size of the package 91.

If a fee system that does not consider weight is used, the processor 25 may determine the fee in Act 26 without considering the measurement value of the weight. In this case, the weighing scale 16 may be omitted, and the processor 12 may omit the measurement value of the weight from the measurement information. If a fee system that does not consider a transport distance is used, the processor 25 may determine the fee in Act 26 without considering the transport destination code. In this case, the processor 12 may exclude the transport destination code from the recognition target in Act 6. The processor 25 may exclude the transport destination code from the acquisition target in Act 25.

The application program related to information processing illustrated in FIG. 4, 5, 6 or 7 may be stored in the main memory 13 or the main memory 26 at the time of transfer of the hardware of the measurement device 10 or the settlement device 20, or may be provided separately from the hardware. In the latter case, the application program is recorded on a removable recording medium such as a magnetic disk, a magneto-optical disk, an optical disk, and a semiconductor memory, or it is transferred through a network.

A portion or all of the respective functions realized by the processors 12 and 25 by information processing can also be realized by hardware executing information processing that is not based on a program, such as a logic circuit. Each of the respective functions may be implemented by combining hardware such as the above-mentioned logic circuit and software control.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A package reception system comprising:
a measurement device, a camera configured to capture an image of a package positioned on a surface of the measurement device and generate image data corresponding to the captured image, and a first processor configured to:
receive the generated image data, determine a size of the package based on the image data, and
output a settlement request that includes the image data, the determined size, and instructions to perform a settlement processing with respect to a fee for receiving and transporting the package; and
a settlement device connected to the measurement device over a network for communicating therewith, the settlement device including a storage device and second processor configured to:
receive the issuance request,
perform the settlement processing with respect to the fee calculated based on a size of the package determined based on the image data, and
control the storage device to store, in association, the image data, the determined size, and a package code for identifying the package.

2. The system according to claim 1, wherein the second processor controls the storage device to store the image data, the determined size and the package code only after the settlement processing is complete.

3. The system according to claim 2, wherein
the first processor is further configured to extract a transport destination code from the image data, the issuance request including the transport destination code, and
the second processor is further configured to calculate the fee based on the determined size of the package and the transport destination code.

4. The system according to any one of claims 1 to 3, wherein
the issuance request includes the image data, and
the second processor is further configured to determine the size of the package based on the image data included in the issuance request.

5. The system according to any one of claims 1 to 4, wherein the first processor is further configured to
extract, from the image data, an image of an invoice included on the package,
determine whether complete invoice information can be determined from the extracted image of the invoice,
if the complete invoice information cannot be determined from the extracted image of the invoice, control a touch panel to display a notification to the user that the invoice information is incomplete, and
if the complete invoice information can be determined from the extracted image of the invoice, output a payment request to the settlement device that includes instructions to perform the settlement processing with respect to the fee for receiving and transporting the package, the payment request not including instructions to print the invoice.

6. The system according to claim 5, wherein
if the complete invoice information cannot be determined from the extracted image of the invoice, the processor controls the touch panel to display a graphic user interface (GUI) allowing a user to select whether to complete the invoice information via the payment apparatus or to end processing.

7. The system according to any one of claims 1 to 6, wherein
the settlement device further includes a touch panel, and
the second processor is further configured to control the touch panel to display a graphic user interface (GUI) allowing a user to input invoice information, and control the printer to print an invoice including the invoice information input by the user and the package code.

8. The system according to any one of claims 1 to 7, wherein
the measurement device further includes a weighing scale configured to acquire a weight measurement of the package positioned on the surface, and
the fee is further calculated based on the acquired weight measurement.

9. The system according to any one of claims 1 to 8, wherein
the settlement device further includes a communication interface configured to communicate with a package management server, and
the second processor is further configured to control the communication interface to transmit, to the package management server, the image data, the determined size and the package code.

10. The system according to any one of claims 1 to 9, wherein the second processor is further configured to:
after receiving the issuance request, determine if the settlement device can perform the settlement processing and print the invoice, and
if the settlement device cannot perform at least one of the settlement processing and printing the invoice, output the issuance request to a predetermined destination.

11. A package reception method comprising:
capturing an image of a package positioned on a surface of a measurement device and generating image data corresponding to the captured image;
determining a size of the package based on the image data;
calculating a fee for receiving and transporting the package based on the determined size of the package;
performing a settlement processing with respect to the fee; and
storing, in association, the image data, the determined size, and a package code for identifying the package.

12. The method according to claim 11, wherein the image data, the determined size and the package code are stored only after the settlement processing is complete.

13. The method according to claim 11 or 12, further comprising:
extracting, from the image data, an image of an invoice included on the package;
determining whether complete invoice information can be determined from the extracted image of the invoice; and
if the complete invoice information cannot be determined from the extracted image of the invoice, displaying a notification to the user that the invoice information is incomplete.

14. The method according to any one of claims 11 to 13, further comprising:
if the complete invoice information cannot be determined from the extracted image of the invoice, controlling a touch panel to display a graphic user interface (GUI) allowing a user to select whether to complete the invoice information via the payment apparatus or to end processing; or
controlling a touch panel to display a graphic user interface (GUI) allowing a user to input invoice information and printing an invoice including the invoice information input by the user and the package code.

15. The method according to any one of claims 11 to 14, further comprising:
weighing the package positioned on the surface with a scale integrated in the surface, wherein
the fee is further calculated based on the weight of the package.
